# EUROPEAN PATENT SPECIFICATION

(11) **EP 0 633 654 B1**
(45) Date of publication and mention of the grant of the patent: **18.09.1996**
(21) Application number: 94114795.1
(22) Date of filing: 10.01.1992
(51) Int. Cl.: H02P 5/168, H02P 5/172

(54) **Control circuit for a DC motor**
Steuerschaltung für einen Gleichstrommotor
Circuit de commande pour moteur à courant continu

(30) Priority: 18.01.1991 JP 18382/91; 18.01.1991 JP 18384/91; 16.02.1991 JP 44370/91
(43) Date of publication of application: 11.01.1995
(62) Divisional of application: 92300257.0
(73) Proprietor: KABUSHIKI KAISHA RIKEN, Tokyo (JP)
(72) Inventor: Yaguchi, Osamu c/o Kabushiki Kaisha Riken, Kashiwazaki-shi, Niigata-ken (JP); Arakawa, Mitsunori c/o Kabushiki Kaisha Riken, Kashiwazaki-shi, Niigata-ken (JP)
(74) Representative: Jackson, David Spence

(56) References cited:
- EP-A- 0 345 914
- FR-A- 2 646 459
- US-A- 4 725 765

## Description

### Field of the Invention

The present invention relates to a circuit for controlling a DC electric motor comprising:
a DC power supply circuit having a live line providing a supply voltage and a return line;
a drive transistor connected to the return line and to a signal terminal and arranged to be in series with the DC electric motor through the signal terminal;
trigger means for causing the DC supply circuit through the motor to be completed momentarily to start the motor;
supply latching means for comparing a terminal voltage at said signal terminal with a first voltage derived from the supply voltage and supplying a supply latching output for the drive transistor while a predetermined relationship holds between the said first voltage and the terminal voltage; and
means for periodically turning off the drive transistor whereby the voltage at the signal terminal is correspondingly periodically representative of the condition of the motor.

### Prior Art

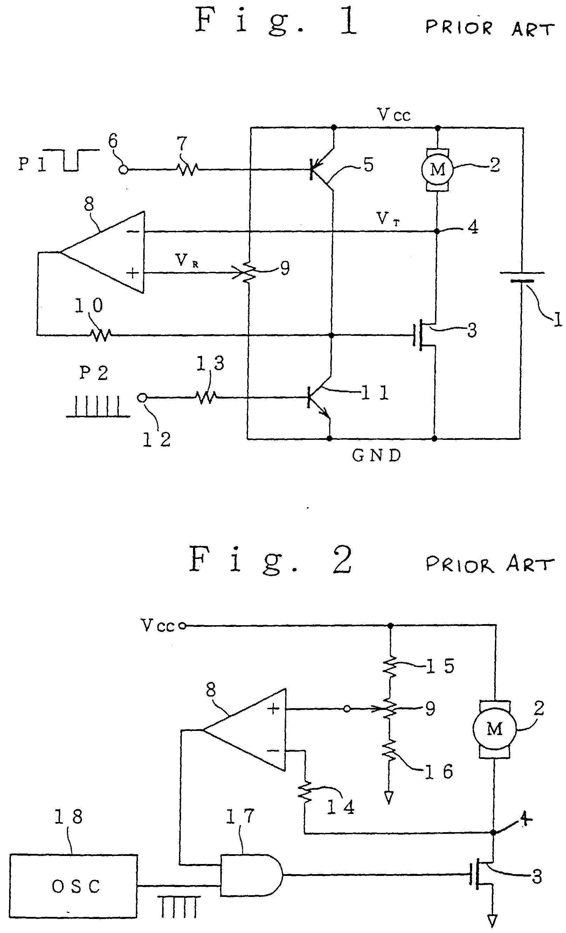

Referring now to Figure 1, a circuit for controlling the restraining torque of a DC motor disclosed in Japanese laid-open patent application no. JP-A-1-311883 is generally shown, which is a circuit of the kind defined above. A DC power supply 1 is connected between a Vcc line and ground or GND. A DC motor 2 is connected between the Vcc line and the drain of an N-channel MOSFET (Metal Oxide Semiconductor Field Effect Transistor) 3 at a relay terminal 4. The MOSFET 3 has its source connected to ground and its gate connected to the collector of a PNP transistor 5. The PNP transistor 5 has its emitter connected to the Vcc line and its base connected to an input terminal 6 via a resistor 7. When a negative trigger pulse P1 is supplied to the input terminal 6, the PNP transistor 5 is turned on to make the MOSFET 3 turn on. The MOSFET 3 in its ON state passes current to the DC motor 2 and the motor 2 rotates during the application of the negative trigger pulse P1.

A comparator 8 for maintaining the rotation of the DC motor 2 is connected between the Vcc line and ground via a supply bus (not shown). The comparator 8 has its inverting input connected to the relay terminal 4 or the drain of the MOSFET 3, its non-inverting input connected to a movable terminal of a variable resistor 9 connected between the Vcc line and ground, and an output connected to the gate of the MOSFET 3 via a resistor 10. The comparator 8 compares the terminal voltage V_{T} of the relay terminal 4 with the reference voltage V_{R} at the movable terminal of the variable resistor 9. The terminal voltage V_{T} is defined by subtracting the induced voltage V_{I} from Vcc. The comparator 8 outputs a logical "H" when V_{T} < V_{R}. Therefore, once the negative trigger pulse P1 is applied to the trigger terminal 6 and the MOSFET 3 is turned on, the drain voltage V_{T} at the terminal 4 becomes a saturated voltage which is lower than the reference voltage V_{R}, and therefore the comparator 8 supplies "H" to the gate of the MOSFET 3 to latch the MOSFET 3 in its ON state and thus maintains the DC motor 2 in rotation.

The DC motor 2 generates pulses each of an absolute induced voltage V_{I} depending upon the rotation rate during the rotation thereof. Each pulse has a pair of negative and positive pulse components when the rotor of the DC motor 2 upon rotating comes to a predetermined angular position relative to a stator thereof. Even if momentarily the MOSFET 3 does not supply power to the rotating DC motor 2, the rotating DC motor 2 will rotate by inertia and will generate these pulses.

An NPN transistor 11 is provided to periodically turn off the MOSFET 3 and to check the rotation condition of the DC motor 2 with the comparator 8. The NPN transistor 11 has its collector connected to the gate of MOSFET 3, its emitter connected to ground and its base connected to a clock terminal 12 via a resistor 13. Positive clock pulses P2 are periodically applied to the clock terminal 12 to provide comparison periods in which the NPN transistor 11 is turned on to make the MOSFET 3 correspondingly turn off.

Upon the application of a positive clock pulse, the MOSFET 3 is turned off and the comparator 8 continues to compare the terminal voltage V_{T} with reference voltage V_{R}. If V_{T} is lower than V_{R}, then the comparator 8 provides an "H" level to the gate of the MOSFET 3 after the end of the comparison period and the MOSFET 3 returns to the latched condition. If V_{T} is higher than V_{R}, then the comparator 8 provides an "L" level to the gate of the MOSFET 3 after the end of the comparison period and the MOSFET 3 remains in a turned OFF condition. If the DC motor 2, controlled by the MOSFET 3, drives a window glass to close a door window of a vehicle, the window glass being moved for example up to close the window in response to the trigger pulse P1, then the DC motor 2 continues to rotate by inertia notwithstanding that periodic positive clock pulses are applied, unless the window glass meets with an obstacle against a frame of the window.

If the periodic clock pulses are not applied to the terminal 12 and the window glass meets with an obstacle against the frame of the window, the stopping of the rotating DC motor 2 while it is receiving power damages the obstacle, and internal coils of the DC motor 2 may be burned out by current passing through the DC motor 2 whilst it is stationary.

However, because of the application of the periodic clock pulses to the terminal 12 and the fact that DC motor 2 does not generate the induced voltage when stopped, the latch condition provided between the comparator 8 and the MOSFET 3 for supplying the power thereto is released when the motor 2 is stopped by an obstacle.

Referring now to Figure 2, a second circuit for controlling a DC motor, which is described in Japanese patent application No. 2-5401 filed on January 23, 1990, is generally shown. In Figure 2, components corresponding to those of Figure 1 have the same numerals respectively and detail descriptions are omitted. A resistor 14 is connected between the relay terminal 4 and the inverting input of the comparator 8. Two resistors 15 and 16 each connected to a respective one of the fixed terminals of the variable resistor 9 are connected to the Vcc line and ground respectively to provide a fine adjustment of the reference voltage V_{R} (finer than that of Figure 1). The wired AND function provided by the resistor 10 and the NPN transistor 11 in Figure 1 is replaced by a two-input AND gate 17. The AND gate 17 has its output connected to the gate of MOSFET 3, one input connected to the output of the comparator 8, and another input connected to an oscillator 18 for providing negative periodic clock pulses. Also, the PNP transistor 5 not shown in Figure 2 may be added with its collector connected to the gate of MOSFET 3, its emitter connected to the Vcc line and its base connected to the input terminal 6 via the resistor 7 as shown in Figure 1.

Operation of the control circuit shown in Figure 2 is identical to that of Figure 1 and detailed description of the operation is omitted.

These control circuit are advantageous compared to a conventional circuit having a series resistor passing supply current to a DC motor because the series resistor, although employed for monitoring the DC motor current, causes serious loss of the current, which degrades the efficiency of the circuit.

Such a motor 2 is generally employed as drive means for a power or automatic window, while as its power source a secondary battery is used such as the DC power supply battery of the vehicle. This battery has many electrical connections to equipment installed in the vehicle such as a cooler, a dynamo, head lights, a car-radio, etc. The voltage of the Vcc line connected to the battery changes when any such piece of equipment is turned on or off. This change in Vcc causes a change in the restraining torque of the DC motor, a higher power supply voltage causing an increased restraining torque, and a lower power supply voltage causing a decreased restraining torque.

In Figures 1 and 2, there is a critical or minimum motor current Imin at which rotation of the DC motor 2 is maintained or not. This current Imin is defined by:${\text{Imin = (Vcc - V}}_{\text{I}} {\text{) / Rm = V}}_{\text{R}} \text{/ Rm}$ where Vcc denotes a power supply voltage, V_{I} denotes an induced voltage, and Rm denotes an internal resistance of the DC motor 2. Therefore, the restraining torque depends upon the critical current I ₘᵢₙ. The critical current changes with a change in the reference voltage V_{R} and accordingly with a change in the power supply voltage Vcc.

The circuits as shown in Figures 1 and 2 can control the restraining torque of the motor but cannot control the rotation rate or speed. It is not practical to control the rotation rate by using a dynamo directly connected to a shaft of the DC motor because of high cost.

The circuit shown in Figure 1 or 2 generally needs a direct current (DC) power supply. In a vehicle such as an automobile, the DC power supply is often obtained from an AC power supply such as an alternating current generator or dynamo with a rectifying circuit which provides a pulsating power supply from the AC power supply and a smoothing capacitor or battery for smoothing the pulsating power. The oscillator 18 comprising an unstable multivibrator, e.g. a 555 available from Signetics or a crystal oscillator and clock dividers, should be omitted because the circuit is more complex and the mean time between failures MTBF will be increased if the oscillator 18 is omitted. Power is consumed in the control circuit mainly by the pulse oscillator and comparator and is not negligible.

According to the present invention, there is provided a circuit of the kind defined hereinbefore at the beginning and characterised in that there is also latch disabling means for controlling the coupling of the supply latching means to the drive transistor and including means for so comparing the terminal voltage with a second voltage derived from the supply voltage as to set the drive transistor in its OFF state while a predetermined relationship holds between the said second voltage and the terminal voltage.

A better understanding of the present invention can be obtained when the following detailed description of the preferred embodiments is considered in conjunction with following drawings, in which:
Figures 1 and 2 are schematic diagrams showing prior control circuits of DC motors;
Figure 3 is a schematic diagram of a circuit for controlling a DC motor, showing an embodiment of the invention; and
Figure 4 is a timing diagram for the circuit of Figure 3.

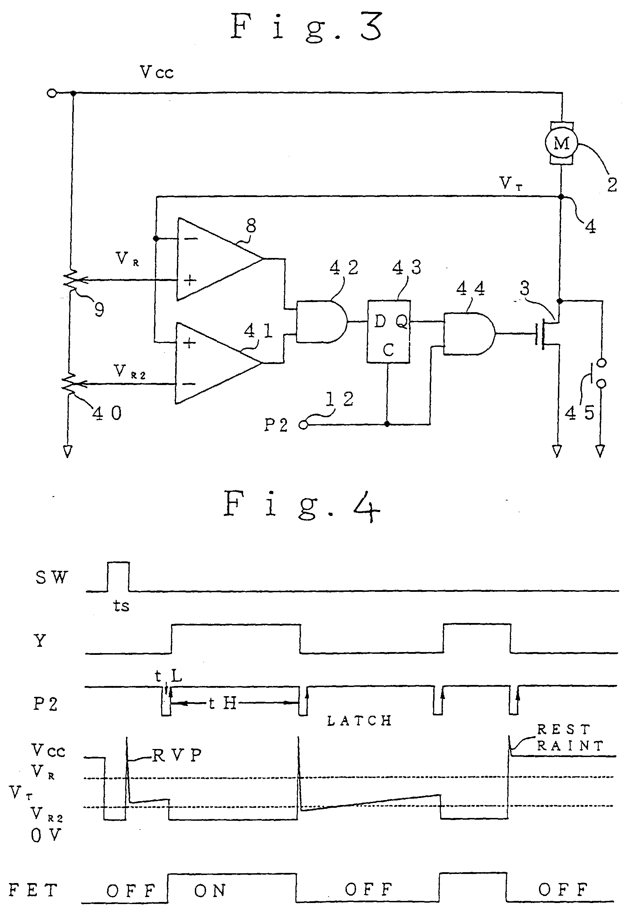

In Figure 3 the same reference numerals are used to denote the same components or parts as those in the prior art shown in Figures 1 and 2 and detail descriptions are omitted.

The circuit of Figure 3 is a circuit for controlling the restraining torque and rotation speed of a DC motor.

In Figure 3, connected between ground and the fixed terminal of the variable resistor 9 remote from its fixed terminal connected to the Vcc line, is a second variable resistor 40 which supplies a rotation speed setting voltage V_{R2} to a comparator 41. The second variable resistor 40 has its movable terminal or tap connected to the inverting input of the comparator 41 while the noninverting input of the comparator 41 receives the terminal voltage V_{T} (or Vcc - V_{I}) of the terminal 4. The comparator 41 compares the terminal voltage V_{T} with the rotation speed setting voltage V_{R2} and outputs a logical "L" when V_{T} < V_{R2} to one input of a two-input AND gate 42. The second input of the AND gate 42 is connected to the output of the comparator 8.

The output of the AND gate 42 is connected to the D input of a transparent latch 43. The latch 43 has its clock C connected to the clock terminal 12 to which a negative clock pulse P2 is applied. The clock pulse P2 is formed by alternation of a logical "H" or "tH" period and a logical "L" or "tL" period. In the latch 43, data at the D input pass through to the Q output when the clock goes logical "L" while the data at the D input is latched or memorized on the Q output when the clock goes logical "H". If a CMOS 4042B available from RCA Corporation is used as the latch 43, its polarity terminal is connected to ground. The Q output of the latch 43 is connected to one input of a second two-input AND gate 44. The second AND gate 44 has its second input connected to the clock terminal 12 and its output connected to the gate of the MOSFET 3. Connected between drain and source of the MOSFET 3 is a trigger switch 45 for triggering the motor 2 instead of the PNP transistor 5 and resistor 7.

Figure 4 shows a timing diagram for portions of the control circuit shown in Figure 3.

In Figures 3 and 4, the MOSFET 3 is initially off. Once the trigger switch 45 (SW in Figure 4) is turned on for a short period (ts), the terminal voltage V_{T} goes to zero potential (or voltage) and the motor 2 begins to rotate and then rotates at the maximum speed. The zero potential of the terminal voltage V_{T} of the terminal 4 is also applied to the comparator 41. The comparator 41 compares the terminal voltage V_{T} with the second reference voltage V_{R2}, and because V_{T} < V_{R2} supplies "L" to the latch 43 via the AND gate 42. An "L" at the D input which is latched by a periodic clock pulse P2 is outputted via the Q output of the latch 43 and the second AND gate 44 to the gate of the MOSFET 3 to make the MOSFET 3 turn off.

As the switch 45 is turned off after the short period (ts), rotor coils of the motor 2 generate the reverse voltage pulse or RVP in which the terminal voltage V_{T} (V_{T} = Vcc - V_{I}) is suddenly sharply increased and then sharply decreased. After that, as the motor 2 is already rotating, the terminal voltage V_{T} becomes (Vcc - V_{I}) due to the induced voltage V_{I} generated by the rotation of the motor 2. At this time, the motor 2 gradually slows down because the MOSFET 3 is in its OFF state. Simultaneously, because the induced voltage V_{I} gradually decreases, the terminal voltage V_{T} gradually rises in this case between the first and second reference voltages V_{R} and V_{R2}, that is, V_{R2} < V_{T} < V_{R} and the comparators 8 and 41 supply "H" levels to the AND gate 42 which supplies an "H" level to the D input of the latch 43. When the subsequent clock pulse P2 goes low, the "H" level at the D input is passed to the Q output and then the one input of the second AND gate 44. As this low pulse P2 is also applied to the second input of the AND gate 44, the output Y of the second AND gate 44 keeps the MOSFET 3 is its OFF state.

When the clock pulse P2 subsequently goes high after the end of the tL period, the Q output at "H" is latched and the output Y of the second AND gate 44 makes the MOSFET 3 turn on. The MOSFET 3 in the turned on state makes the motor 2 rotate faster than that at turn off.

If the motor 2 is stopped by an obstacle or is in the excessive torque condition, that is, V_{R} < V_{T} (= Vcc - V_{I}) or if the motor 2 is rotated over the predetermined speed, that is, V_{T} < V_{R2}, then either the output of the comparator 8 or of the comparator 41 goes low to make the output of the AND gate 42 go low. Consequently, when the pulse P2 goes low and then high, the "L" level applied to the D input of the latch 43 from the AND gate 42, is transferred to the Q output thereof and then latched. The "L" level of the Q output is applied via the second AND gate 44 to the gate of the MOSFET 3 with a nanosecond order delay to make the MOSFET 3 turn off and shut off the power supply to the motor 2. The DC motor 2 is protected from burning of the rotor or stator coils when an obstacle is trapped within the powered window. Also, the rotation of the DC motor 2 is gradually slowed down in the over speed condition.

As described above, the voltages V_{R}, V_{T} and V_{R2} are compared with each other when the respective pulse P2 goes low and then high. The MOSFET 3 enters either the "ON" or "OFF" state in the "tH" period depending upon relations between V_{R} and V_{T}, and V_{T} and V_{R2}. Finally, the rotation speed of the motor 2 tends towards the predetermined value so that the terminal voltage V_{T} approaches V_{R2}. Thus, the speed of the motor 2 is controlled to approach the predetermined speed by setting V_{R2} with the second variable resistor 40.

If the torque of the motor 2 depends upon the minimum drive current Iₘᵢₙ as described, then the torque against the stoppage or arrest of the motor 2 can be controlled by setting V_{R} with the first variable resistor 9. It often happens when using a battery as the power supply 1 that the motor drive current at low voltage power supply is under the torque set by the variable resistor 9 and the motor 2 will not be stopped. In this case, the power supply to the motor 2 is certainly shut off because there is no induced voltage upon stoppage of the motor 2. Therefore, in the motor control circuit of the motor, its restraining torque can be controlled by the variable resistor 9 and its rotation speed by the second variable resistor 40.

The described embodiment of the present invention provides control of the rotation speed of the DC motor by "ON" or "OFF" control, or pulse width modulation of the drive transistor 3 as well as control of the restraining torque thereof by detecting indirectly its restraining torque and rotation speed from the induced voltage which depends upon the rotation of the motor 2.

## Claims

1. A circuit for controlling a DC electric motor comprising:
a DC power supply circuit having a live line providing a supply voltage (Vcc) and a return line (GND);
a drive transistor (3) connected to the return line (GND) and to a signal terminal (4) and arranged to be in series with the DC electric motor (2) through the signal terminal (4);
trigger means (45) for causing the DC supply circuit through the motor (2) to be completed momentarily to start the motor (2);
supply latching means (8,9) for comparing a terminal voltage (V_{T}) at said signal terminal (4) with a first voltage (V_{R}) derived from the supply voltage (Vcc) and supplying a supply latching output for the drive transistor (3) while a predetermined relationship holds between the said first voltage (V_{R}) and the terminal voltage (V_{T}); and
means (12,44) for periodically turning off the drive transistor (3) whereby the voltage at the signal terminal (4) is correspondingly periodically representative of the condition of the motor (2), characterized in that there is also
latch disabling means (41,42) for controlling the coupling of the supply latching means (8,9) to the drive transistor (3) and including means (41) for so comparing the terminal voltage (V_{T}) with a second voltage (V_{R2}) derived from the supply voltage (Vcc) as to set the drive transistor (3) in its OFF state while a predetermined relationship holds between the said second voltage (V_{D2},V_{R2}) and the terminal voltage (V_{T}).

2. A circuit according to claim 1, characterised in that the comparing means (41) of the latch disabling means (41,42) provides a signal for setting the drive transistor (3) in its OFF state while the terminal voltage (V_{T}) is lower than the said second voltage (V_{R2}).

3. A circuit according to claim 2, characterised in that the latch disabling means (41,42) is coupled through a latch (43) to the drive transistor (3), and the latch (43) is arranged to operate in synchronism with the said means (12,44) for periodically turning off the drive transistor (3).

## Patentansprüche

1. Steuerschaltung für einen Gleichstrommotor, mit
- einer Gleichstrom-Leistungsversorgungsschaltung, die eine Hinleitung zur Lieferung einer Versorgungsspannung (Vcc) sowie eine Rückleitung (GND) aufweist;
- einem Treibertransistor (3), der mit der Rückleitung (GND) und einem Signalanschluß (4) verbunden ist und über den Signalanschluß (4) in Reihe mit dem Gleichstrommotor (2) liegt:
- einer Triggereinrichtung (45) zur momentanen Vervollständigung der Gleichstromversorgungsschaltung über den Gleichstrommotor (2), um den Motor (2) zu starten;
- Versorgungshaltemitteln (8. 9) zum Vergleichen einer Anschlußspannung (V_{T}) am Signalanschluß (4) mit einer von der Versorgungsspannung (Vcc) abgeleiteten ersten Spannung (V_{R}) sowie zur Lieferung eines Versorgungshalteausgangs für den Treibertransistor (4), während eine vorbestimmte Relation zwischen der ersten Spannung (V_{R}) und der Anschlußspannung (V_{T}) gilt; und
- Mitteln (12, 44) zum periodischen Ausschalten des Treibertransistors (3), wodurch die Spannung am Signalanschluß (4) entsprechend periodisch den Zustand des Motors (2) repräsentiert;
**dadurch gekennzeichnet**, daß auch Haltezustands-Beendigungsmittel (41, 42) zur Steuerung der Kopplung der Versorgungshaltemittel (8, 9) mit dem Treibertransistor (3) vorhanden sind, die Mittel (41) zum Vergleichen der Anschlußspannung (V_{T}) mit einer von der Versorgungsspannung (Vcc) abgeleiteten zweiten Spannung (V_{R2}) enthalten, um den Treibertransistor (3) in seinen AUS-Zustand zu überführen, während eine vorbestimmte Relation zwischen der zweiten Spannung (V_{D2}, V_{R2}) und der Anschlußspannung (V_{T}) gilt.

2. Schaltung nach Anspruch 1, **dadurch gekennzeichnet**, daß die Vergleichsmittel (41) der Haltezustands-Beendigungsmittel (41, 42) ein Signal zum Überführen des Treibertransistors (3) in seinen AUS-Zustand liefern, wenn die Anschlußspannung (V_{T}) kleiner ist als die zweite Spannung (V_{R2}).

3. Schaltung nach Anspruch 2, **dadurch gekennzeichnet**, daß die Haltezustands-Beendigungsmittel (41, 42) über eine Verriegelung (43) mit dem Treibertransistor (3) gekoppelt sind, wobei die Verriegelung (43) synchron mit den Mitteln (12, 44) zum periodischen Ausschalten des Treibertransistors (3) arbeitet.

## Revendications

1. Circuit de commande d'un moteur électrique à courant continu comprenant :
un circuit d'alimentation en courant continu ayant une ligne sous tension qui transmet une tension d'alimentation (Vcc) et une ligne de retour (GND) ;
un transistor de pilotage (3) connecté à la ligne de retour (GND) et à une borne de signaux (4) et destiné à être monté en série avec le moteur électrique à courant continu (2) par la borne de signaux (4) ;
un dispositif de déclenchement (45) destiné à provoquer la connexion temporaire du circuit d'alimentation en courant continu au moteur (2) afin que le moteur (2) soit mis en fonctionnement ;
un dispositif de verrouillage d'alimentation (8, 9) destiné à comparer une tension de borne (V_{T}) existant à ladite borne de signaux (4) à une première tension (V_{R}) dérivée de la tension d'alimentation (Vcc) et à transmettre un signal de sortie de verrouillage d'alimentation destiné au transistor de pilotage (3) lorsque la relation prédéterminée entre ladite première tension (V_{R}) et ladite tension de borne (V_{T}) est obtenue ; et
un dispositif (12, 44) destiné à mettre périodiquement le transistor de pilotage (3) à l'état non conducteur de manière que la tension à la borne de signaux (4) soit représentative de l'état du moteur (2) périodiquement et de manière correspondante,
caractérisé en ce que il comprend aussi
un dispositif d'inhibition de bascule (41, 42) destiné à commander le couplage du dispositif de verrouillage d'alimentation (8, 9) au transistor de pilotage (3) et comprenant un dispositif (41) destiné à comparer la tension de borne (V_{T}) à une seconde tension (V_{R2}) dérivée de la tension d'alimentation (Vcc) afin que le transistor de pilotage (3) soit mis à l'état non conducteur lorsqu'une relation prédéterminée existe entre ladite seconde tension (V_{D2}, V_{R2}) et la tension de borne (V_{T}).

2. Circuit selon la revendication 1, caractérisé en ce que le dispositif de comparaison (41) du dispositif d'inhibition de bascule (41, 42) fournit un signal destiné à mettre le transistor de pilotage (3) dans son état non conducteur lorsque la tension de borne (V_{T}) est inférieure à ladite seconde tension (V_{R2}).

3. Circuit selon la revendication 2, caractérisé en ce que le dispositif d'inhibition de bascule (41, 42) est couplé via un circuit de bascule (43) au transistor de pilotage (3), et le circuit de bascule (43) est destiné à fonctionner en synchronisme avec ledit dispositif (12, 44) pour mettre périodiquement à l'état non conducteur le transistor de pilotage (3).
